# EUROPÄISCHE PATENTSCHRIFT

(11) **EP 4 037 860 B1**
(45) Veröffentlichungstag und Bekanntmachung des Hinweises auf die Patenterteilung: **26.03.2025**
(21) Anmeldenummer: 20781512.7
(22) Anmeldetag: 29.09.2020
(51) Int. Cl.: B23F 19/00, B23F 21/00, B21H 5/02, B23F 5/16

(54) **VERFAHREN UND VORRICHTUNG ZUM GLÄTTEN DER ZAHNFLANKEN DER ZÄHNE VERZAHNTER WERKSTÜCKE, SOWIE WERZEUG ZUR DURCHFÜHRUNG DES VERFAHRENS**
METHOD AND DEVICE FOR GRINDING TOOTH FLANKS OF THE TEETH OF TOOTHED WORKPIECES, AND TOOL FOR CARRYING OUT THE METHOD
PROCÉDÉ ET DISPOSITIF DE MEULAGE DES FLANCS DE DENTS DES DENTS DE PIÈCES DENTÉES, ET OUTIL DESTINÉ À METTRE EN ?UVRE LE PROCÉDÉ

(30) Priorität: 02.10.2019 DE 102019126669
(43) Veröffentlichungstag der Anmeldung: 10.08.2022
(73) Patentinhaber: Profilator GmbH & Co. KG, 42329 Wuppertal (DE)
(72) Erfinder: WEBER, Gerd-Thomas, 42119 Wuppertal (DE)
(74) Vertreter: Grundmann, Dirk
(86) Internationale Anmeldenummer: PCT/EP2020/077191
(87) Internationale Veröffentlichungsnummer: WO 2021/063924

(56) Entgegenhaltungen:
- EP-A1- 0 815 984
- EP-A1- 2 474 379
- DE-A1- 102017 000 260
- JP-A- S5 441 253
- JP-A- S5 985 338
- US-A1- 2012 227 530

## Beschreibung

### Gebiet der Technik

Die Erfindung betrifft ein Verfahren und eine Vorrichtung zum Feinbearbeiten verzahnter Werkstücke mit einem in der Art eines Wälzschälrades ausgebildeten, von einer Werkzeugspindel um eine Werkzeugdrehachse drehangetriebenen Werkzeug, das Bearbeitungszähne aufweist, die in Zahnlücken des von einer windschief zur Werkzeugdrehachse angeordneten und dazu synchron um eine Werkstückdrehachse drehangetriebenen Werkstückspindel getragenen Werkstücks in einer wälzenden Bewegung eingreifen, mit einer Steuerung, die derart programmiert ist, dass Bearbeitungskanten der Bearbeitungszähne die Zahnflanken der Zähne des Werkstücks in Zahnflankenerstreckungsrichtung bearbeiten. Die Erfindung betrifft auch ein Werkzeug zur Durchführung des Verfahrens.

### Stand der Technik

Wälzschälwerkzeuge sind im Stand der Technik in vielfältiger Form bekannt. Beispielsweise aus der DE 2 43 514, der EP 2 665 574 B1, der US 3,264,940 oder der EP 2 520 390 B1, die ein Verfahren gemäß dem Oberbegriff des Anspruchs 1 ausführen, eine Vorrichtung gemäß dem Oberbegriff des Anspruchs 7 darstellen und ein Werkzeug gemäß dem Oberbegriff des Anspruchs 13 offenbaren.

### Zusammenfassung der Erfindung

Der Erfindung liegt die Aufgabe zugrunde, die Oberflächenrauigkeit der Zahnflanken der Zähne verzahnter Werkstücke zu vermindern.

Gelöst wird die Aufgabe durch das im Anspruch 1 angegebene Bearbeitungsverfahren, die im Anspruch 7 charakterisierte Vorrichtung zur Durchführung des Verfahrens und das im Anspruch 13 angegebene Werkzeug zur Durchführung des Verfahrens. Die Unteransprüche stellen vorteilhafte Weiterbildungen der nebengeordneten Ansprüche dan

Zunächst und im Wesentlichen schlägt die Erfindung vor, als Bearbeitungswerkzeug ein Glättwerkzeug zu verwenden, welches bis auf die Bearbeitungskosten ansonsten die Gestalt eines Wälzschälrades aufweist. Die Bearbeitungszähne des Wälzschälrades greifen in die Zahnlücken des bereits verzahnten Werkrades ein. Die Eindringtiefe, also die Spanungsdicke bzw. Schnitttiefe ist so eingestellt, dass die Bearbeitungskanten der Bearbeitungszähne des Werkzeuges, die bei einem bekannten Schälrad spanabhebend in die Zahnflanken der Zähne des Werkrades eingreifen, lediglich eine Glättfunktion entfalten. Hierzu wird insbesondere vorgeschlagen, dass der Rundungsradius der Bearbeitungskanten beim erfindungsgemäßen Werkzeug größer ist als bei einem bekannten Schälrad. Der Rundungsradius der Bearbeitungskanten ist insbesondere größer als die Eindringtiefe der Bearbeitungskanten in die Oberfläche der zu bearbeitenden Zahnflanke. Der Werkstoff des Werkrades hat eine derartige Qualität, dass die Bearbeitungskanten materialumformend in Wirkung treten. Sie schieben über eine Glättebene hinausragende Abschnitte der die Rauheit bildenden Strukturen in benachbarte Bereiche, die unterhalb der Glättebene liegen. Die Ebene, entlang welcher sich die Bearbeitungskanten bewegen, liegt somit zwischen einer durch die Spitzen der die Rauheit bildenden Strukturen gelegte erste Ebene und einer durch die Täler zwischen den die Rauheit bildenden Strukturen gelegten zweiten Ebene. Dabei ist der Rundungsradius bevorzugt größer als der Abstand zwischen Glättebene und der ersten, durch die Spitzenkonturen verlaufenden Ebene. Ein Mittelpunkt der Verrundung liegt somit bevorzugt außerhalb des zwischen erster Ebene und zweiter Ebene sich erstreckenden Volumens. Das erfindungsgemäße Verfahren eignet sich besonders für die Oberflächenglättung von aus einem Vergütungsstahl oder einem Nitrierstahl gefertigte Werkstück. Die Zugfestigkeit des Werkstoffs der Werkstücke liegt bevorzugt unter 1350 N/mm². Das Verfahren kann an Innenverzahnungen oder an Außenverzahnungen angewendet werden. Die Zähne des Bearbeitungswerkzeuges können von einer Innenverzahnung oder einer Außenverzahnung gebildet werden. Der Verrundungsradius der Bearbeitungskanten beträgt mindestens 50 Mikrometer. Der Verrundungsradius kann aber auch mindestens 100 Mikrometer oder mindestens 150 Mikrometer betragen.

### Kurze Beschreibung der Zeichnungen

Die Erfindung wird nachfolgend anhand beigefügter Zeichnungen im Detail erläutert. Es zeigen:
- Fig. 1: schematisch die räumliche Anordnung eines um eine Werkzeugachse 3 drehangetriebenen Werkzeugs 1 zu einem um eine Werkstückachse 4 drehangetriebenen Werkstück 2,
- Fig. 2: vergrößert die Darstellung gemäß der Schnittlinie II-II in Figur 1 den Eingriff der Bearbeitungszähne 7 in Zahnlücken 6 der Verzahnung des Werkrades 2,
- Fig. 3: die Darstellung gemäß der Schnittlinie III-III in Figur 1 den Eingriff eines Bearbeitungszahnes 7 in die Oberfläche einer Zahnflanke 9 eines Zahnes 5,
- Fig. 4: schematisch den wesentlichen Teil einer erfindungsgemäßen Vorrichtung mit einer ein Werkzeug 1 tragenden Werkstückspindel 17 und einer ein Werkrad 2 tragenden Werkstückspindel 15.

### Beschreibung der Ausführungsformen

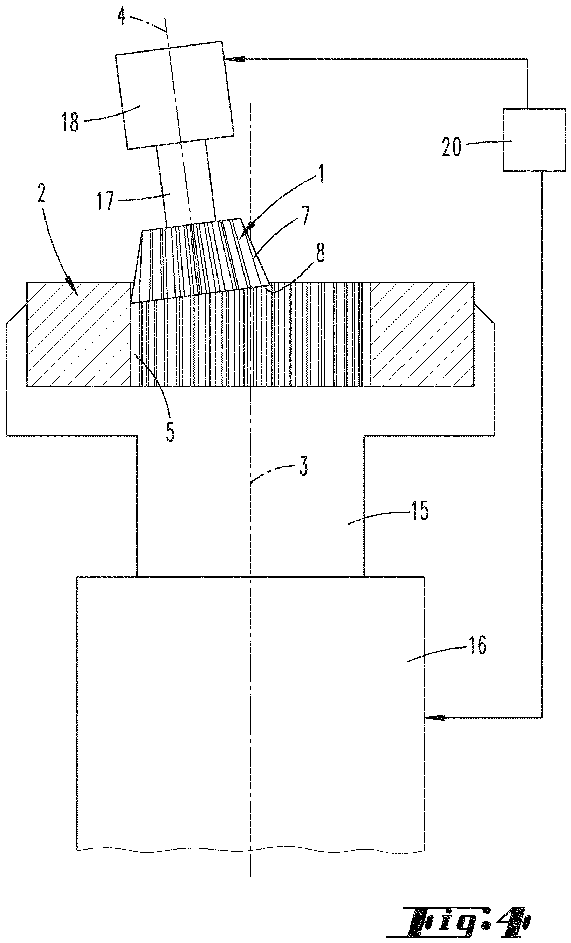

Die Figur 4 zeigt schematisch eine Vorrichtung zur Feinbearbeitung von Werkrädern 2. Im Ausführungsbeispiel gemäß Figur 4 besitzt das Werkrad 2 eine Innenverzahnung mit Zähnen 5, die jeweils Zahnflanken 9 besitzen. Die Verzahnung wurde in einem vorhergehenden Bearbeitungsverfahren, beispielsweise durch Wälzschälen erzeugt. Die Zahnflanken 9 können grob verzahnt sein. Es ist aber auch möglich, dass die Oberflächen der Zahnflanken 9 bereits geschlichtet wurden.

Bei der in Figur 4 dargestellten erfindungsgemäßen Vorrichtung kann es sich um eine Spezialvorrichtung handeln, die ausschließlich dafür vorgesehen ist, bereits vorverzahnte Werkräder 2 feinzubearbeiten. Es ist aber auch vorgesehen, dass die Vorrichtung nicht nur die in Figur 4 dargestellte Werkzeugspindel 18 mit einem Glättwerkzeug 1 aufweist. Es ist auch vorgesehen, dass die Vorrichtung ein zweites Werkzeug aufweisen kann, welches beispielsweise die Verzahnung fertigt. Mit dem nicht dargestellten Verzahnwerkzeug kann die Verzahnung des Werkrades 2 durch eine Wälzschälbearbeitung durchgeführt werden. Bei einer derartigen Wälzschälbearbeitung stehen die Achsen 3 von Werkrad 2 und 4 von Werkzeug 1 windschief zueinander, so dass Schneidkanten von Schneidzähnen des Wälzschälrades in der Art einer Schraub-Wälz-Bewegung zerspanend die Zahnlücken zwischen den Zähnen fertigen. Dies erfolgt mit einem Vorschub in Zahnflankenerstreckungsrichtung. Die Verzahnungen von Werkrad und Schälrad greifen dabei in der Art einer Schraubenbewegung ineinander.

Während das zuvor beschriebene Wälzschälwerkzeug zur Verzahnung des Werkrades 2 Schneidkanten mit einem kleinen Verrundungsradius aufweist, besitzt das in der Figur 4 dargestellte, die Form eines Wälzschälrades aufweisende Werkzeug 1 Bearbeitungszähne 7, deren Bearbeitungskanten 8 einen Verrundungsradius mit einem größeren Wert besitzen.

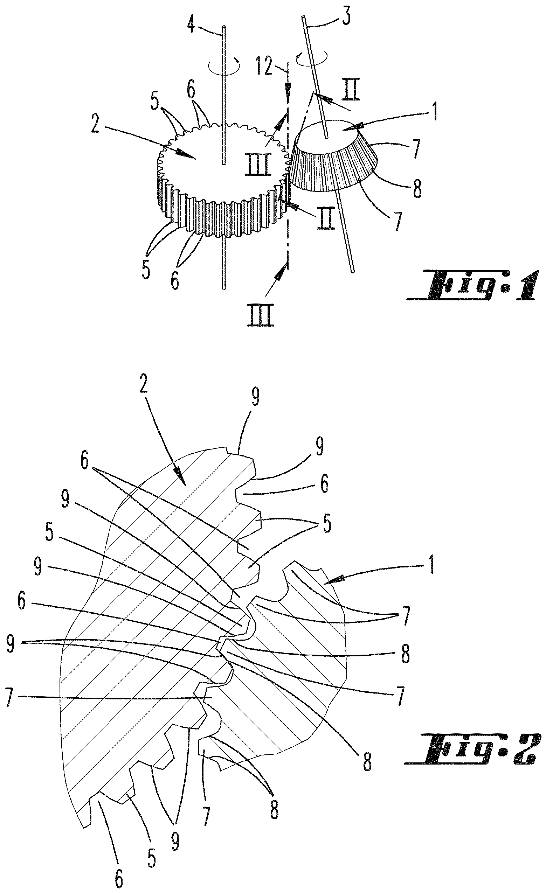

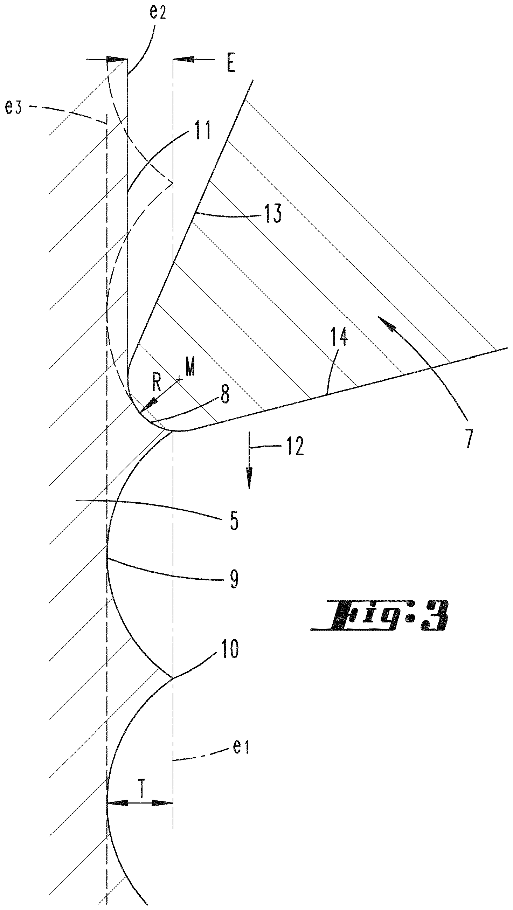

Die Kinematik der Wälzschälbewegung, die zum oben beschriebenen Verzahnen verwendet wird, die aber auch zum erfindungsgemäßen Feinbearbeiten der Zahnflanken 9 verwendet wird, wird in den Figuren 1 und 2 erläutert. Die Figur 1 zeigt perspektivisch die relative räumliche Lage von Werkzeug 1 und Werkrad 2 zueinander. Die Figur 2 verdeutlicht in Form einer Schnittdarstellung den Eingriff der Schneidzähne bzw. Bearbeitungszähne 7 in die Zahnlücken 6 zwischen den Zähnen 5 der Verzahnung des Werkrades 2. Die Bearbeitungskanten 8 bearbeiten dabei die Zahnflanken 9 der Zähne 5, indem sie sich an den Zahnflanken 9 in Umfangsrichtung des Werkrades 2 bzw. des Werkzeugs 1 abwälzen. Aufgrund des Neigungswinkels der beiden Drehachsen 3, 4 zueinander bewegen sich die Bearbeitungskanten 8 zusätzlich in der in den Figuren 1 und 3 mit der Bezugsziffer 12 bezeichneten Vorschubrichtung, die sich in Zahnerstreckungsrichtung erstreckt.

Die Figur 3 zeigt schematisch die Wirkungsweise des erfindungsgemäßen Verfahrens. Die grob- oder bereits feinbearbeitete Zahnflanke 9 des Zahnes 5 besitzt eine Rauigkeit mit einer Rautiefe T. Die Rauheit der Zahnflanke 9 wird in der Figur 3 durch die Strukturen 10 angedeutet. Bei diesen Strukturen kann es sich um Spuren der vorhergehenden zerspanenden Bearbeitung handeln. Der Bearbeitungszahn 7 des Werkzeuges 1 besitzt eine Bearbeitungskante 8, die in dem in Figur 3 dargestellten Querschnitt auf einer Kreisbogenlinie von einer Spanfläche 14 zu einer Freifläche 13 verläuft. Die Bearbeitungskante 8 besitzt somit eine Kantenverrundung mit einem Radius R um einen Mittelpunkt.

Die beiden Drehachsen 3, 4 erhalten einen derartigen Achsabstand, dass die Bearbeitungskante 8 bei der schraubenden Relativbewegung von Werkzeug 1 und Werkrad 2 lediglich in eine Berührung zu den Zahnflanken 9 tritt, nicht jedoch spanabhebend in die Zahnflanken 9 eintreten. Es ist insbesondere vorgesehen, dass die Bearbeitungskanten 8 nicht bis in die tiefsten Bereiche der Strukturen 10 der Zahnflanken 9 greifen, also nicht bis in die tiefsten Flächenabschnitte der Verrauung.

Die Bearbeitungskanten 8 greifen aber tiefer in die durch die Spitzen der Strukturen 10 gebildeten Parallelfläche e1 zur Zahnflankenfläche ein, um beim Bearbeiten die Spitzen 10 der rauen Zahnflanken 9 zu glätten, wobei ihr Material in die benachbarten Täler zwischen den Spitzen 10 hineingedrückt wird.

In der Figur 3 ist eine Ebene, die durch die höchsten Erhebungen 10 der Zahnflanke 9 verläuft mit e1 bezeichnet. Mit e3 ist eine Ebene bezeichnet, die durch die tiefsten Bereiche der Zahnflanken 9 verläuft, so dass die Rautiefe T der Abstand der beiden Ebenen e1 und e3 ist. Die Vorrichtung wird zur erfindungsgemäßen Bearbeitung derart eingestellt, dass sich die verrundete Bearbeitungskante 8 entlang einer Ebene e2 entlang bewegt, die zwischen der Ebene e1 und der Ebene e3 liegt, also die durch den Bereich der die Rauheit bildenden Strukturen 10 hindurchgeht. Der Abstand E zwischen der ersten Ebene e1 und der zweiten Ebene e2 kann als Spanungstiefe bzw. Eingriffstiefe bezeichnet werden. Diese ist erfindungsgemäß kleiner als der Verrundungsradius R der Bearbeitungskante 8. Als Folge dieser Dimensionierung arbeitet die Bearbeitungskante 8 nicht spanabhebend, sondern umformend, indem sie das Material der über die zweite Ebene e2 herausragenden Abschnitte der Zahnflanke 9 vor sich her bis in die zwischen zwei Spitzen 10 liegende Vertiefung schiebt.

Während Schneidkanten an Wälzschälwerkzeugen einen Verrundungsradius von kleiner 20 Mikrometer aufweisen, hat der Verrundungsradius der Bearbeitungskanten 8 Werte, die größer als 50 Mikrometer sind. Bei bevorzugten Verfahren oder Vorrichtungen liegt der Verrundungsradius der Bearbeitungskanten 8 bei mindestens 100 Mikrometer oder mindestens 150 Mikrometer.

Beim erfindungsgemäßen Verfahren beaufschlagen die Bearbeitungskanten 8 ohne Spanabtrag glättend die Zahnflanken 9.

Die erfindungsgemäße Vorrichtung weist eine Steuereinrichtung auf, wobei die Steuereinrichtung 20 derart programmiert ist, die Drehachsen 3, 4 derart voneinander beanstandet sind und die Bearbeitungszähne 7 derart gestaltet sind, dass die Bearbeitungszähne 7 ohne Spanabtrag glättend die Zahnflanken 9 beaufschlagen.

Beim Verfahren und bei der Vorrichtung kann der Rundungsradius R der Bearbeitungskanten 8 größ als die Spanungsdicke bzw. Schnitttiefe sein.

Beim Verfahren und bei der Vorrichtung kann das Werkstück 2 aus einem Vergütungsstahl oder Nitrierstahl bestehen.

Beim Verfahren und bei der Vorrichtung kann die Zugfestigkeit des Werkstoffs des Werkstücks 2 maximal 1350 N/mm² betragen.

Beim Verfahren und bei der Vorrichtung kann das Werkstück 2 eine Innenverzahnung oder eine Außenverzahnung aufweisen, deren Zahnflanken 9 von den Bearbeitungskanten 8 geglättet werden.

Beim Verfahren und bei der Vorrichtung können die Bearbeitungszähne 7 von einer Innenverzahnung oder einer Außenverzahnung ausgebildet sein.

Beim Werkzeug zur Durchführung des Verfahrens ist der Rundungsradius R der mindestens einen Bearbeitungskante 8 größer als 50 Mikrometer.

### Liste der Bezugszeichen

| | | | |
|---|---|---|---|
| 1 | Werkzeug | E | Spanungstiefe |
| 2 | Werkrad | G | Glätttiefe |
| 3 | Werkzeugachse | R | Rautiefe |
| 4 | Werkstückachse | R | Rundungsradius |
| 5 | Zahn | | |
| 6 | Zahnlücke | e1 | Ebene |
| 7 | Bearbeitungszahn | e2 | Ebene |
| 8 | Bearbeitungskante | e3 | Ebene |
| 9 | Zahnflanke | | |
| 10 | Struktur | | |
| 11 | geglättete Zahnflanke | | |
| 12 | axiale Vorschubkomponente | | |
| 13 | Freifläche | | |
| 14 | Spanfläche | | |
| 15 | Werkstückspindel | | |
| 16 | Antriebsmotor | | |
| 17 | Werkzeugspindel | | |
| 18 | Antriebsmotor | | |
| 20 | Steuerung | | |

## Patentansprüche

1. Verfahren zum Feinbearbeiten verzahnter Werkstücke (2) mit einem in der Art eines Wälzschälrades ausgebildeten, von einer Werkzeugspindel (17) drehangetriebenen Werkzeug (1), das Bearbeitungszähne (7) aufweist, die in Zahnlücken (6) des von einer windschief zur Werkzeugdrehachse (4) angeordneten und dazu synchron angetriebenen Werkstückspindel (15) getragenen Werkstücks (2) in einer wälzenden Bewegung eingreifen, so dass Bearbeitungskanten (8) der Bearbeitungszähne (7) die Zahnflanken (9) der Zähne (5) des Werkstücks (2) in Zahnflankenerstreckungsrichtung bearbeiten, **dadurch gekennzeichnet, dass** die Bearbeitungskanten (8) ohne Spanabtrag glättend die Zahnflanken (9) beaufschlagen.

2. Verfahren nach Anspruch 1, **dadurch gekennzeichnet, dass** der Rundungsradius (R) der Bearbeitungskanten (8) größer ist als die Spanungsdicke bzw. Schnitttiefe (E).

3. Verfahren nach einem der vorhergehenden Ansprüche, **dadurch gekennzeichnet, dass** das Werkstück (2) aus einem Vergütungsstahl oder Nitrierstahl besteht.

4. Verfahren nach Anspruch 3, **dadurch gekennzeichnet, dass** die Zugfestigkeit des Werkstoffs des Werkstücks (2) maximal 1350 N/mm² beträgt.

5. Verfahren nach einem der vorhergehenden Ansprüche, **dadurch gekennzeichnet, dass** das Werkstück (2) eine Innenverzahnung oder eine Außenverzahnung aufweist, deren Zahnflanken (9) von den Bearbeitungskanten (8) geglättet werden.

6. Verfahren nach einem der vorhergehenden Ansprüche, **dadurch gekennzeichnet, dass** die Bearbeitungszähne (7) von einer Innenverzahnung oder einer Außenverzahnung ausgebildet sind.

7. Vorrichtung zum Feinbearbeiten verzahnter Werkstücke (2) mit einem in der Art eines Wälzschälrades ausgebildeten, von einer Werkzeugspindel (17) um eine Werkzeugdrehachse (4) drehangetriebenen Werkzeug (1), das Bearbeitungszähne (7) aufweist, die in Zahnlücken (6) des von einer windschief zur Werkzeugdrehachse (4) angeordneten und dazu synchron um eine Werkstückdrehachse (3) drehangetriebenen Werkstückspindel (15) getragenen Werkstücks (2) in einer wälzenden Bewegung eingreifen, mit einer Steuerung (20), die derart programmiert ist, dass Bearbeitungskanten (8) der Bearbeitungszähne (7) die Zahnflanken (9) der Zähne (5) des Werkstücks (2) in Zahnflankenerstreckungsrichtung bearbeiten, **dadurch gekennzeichnet, dass** die Steuereinrichtung (20) derart programmiert ist, die Drehachsen (3, 4) derart voneinander beanstandet sind und die Bearbeitungszähne (7) derart gestaltet sind, dass die Bearbeitungszähne (7) ohne Spanabtrag glättend die Zahnflanken (9) beaufschlagen.

8. Vorrichtung nach Anspruch 7, **dadurch gekennzeichnet, dass** der Rundungsradius (R) der Bearbeitungskanten (8) größer ist als die Spanungsdicke bzw. Schnitttiefe (E).

9. Vorrichtung nach Anspruch 7 oder 8, **dadurch gekennzeichnet, dass** das Werkstück (2) aus einem Vergütungsstahl oder Nitrierstahl besteht.

10. Vorrichtung nach Anspruch 9, **dadurch gekennzeichnet, dass** die Zugfestigkeit des Werkstoffs des Werkstücks (2) maximal 1350 N/mm² beträgt.

11. Vorrichtung nach einem der Ansprüche 7 bis 10, **dadurch gekennzeichnet, dass** das Werkstück (2) eine Innenverzahnung oder eine Außenverzahnung aufweist, deren Zahnflanken (9) von den Bearbeitungskanten (8) geglättet werden.

12. Vorrichtung nach einem der Ansprüche 7 bis 11, **dadurch gekennzeichnet, dass** die Bearbeitungszähne (7) von einer Innenverzahnung oder einer Außenverzahnung ausgebildet sind.

13. Werkzeug zur Durchführung des Verfahrens gemäß einem der Ansprüche 1 bis 6, welches um eine Werkzeugdrehachse (4) drehantreibbar ist, Bearbeitungszähne (7) mit einer Kantenverrundung (R) aufweisenden Bearbeitungskante (8) aufweist und in der Art eines Schälrades gestaltet ist, **dadurch gekennzeichnet, dass** der Rundungsradius (R) der Bearbeitungskante (8) größer ist als 50 Mikrometer.

## Claims

1. A method for finishing toothed workpieces (2) with a tool (1) that is designed in the form of a circular skiving cutter and rotationally driven by a tool spindle (17), wherein said tool has machining teeth (7) that engage into tooth gaps (6) of the workpiece (2) in a rolling motion, and wherein said workpiece is carried by a workpiece spindle (15) that is arranged in a skewed manner relative to the tool rotational axis (4) and driven synchronous thereto such that machining edges (8) of the machining teeth (7) machine the tooth flanks (9) of the teeth (5) of the workpiece (2) in the direction in which the tooth flanks extend, **characterized in that** the machining edges (8) act upon the tooth flanks (9) in a smoothing manner without metal removal.

2. The method according to claim 1, **characterized in that** the rounding radius (R) of the machining edges (8) is greater than the machining thickness or cutting depth (E).

3. The method according to one of the preceding claims, **characterized in that** the workpiece (2) consists of a tempering steel or nitriding steel.

4. The method according to claim 3, **characterized in that** the tensile strength of the material of the workpiece (2) amounts to no more than 1350 N/mm².

5. The method according to one of the preceding claims, **characterized in that** the workpiece (2) has an internal toothing or an external toothing, the tooth flanks (9) of which are smoothed by the machining edges (8).

6. The method according to one of the preceding claims, **characterized in that** the machining teeth (7) are formed by an internal toothing or an external toothing.

7. A device for finishing toothed workpieces (2) with a tool (1) that is designed in the form of a circular skiving cutter and rotationally driven about a tool rotational axis (4) by a tool spindle (17), wherein said tool has machining teeth (7) that engage into tooth gaps (6) of the workpiece (2) in a rolling motion, wherein said workpiece is carried by a workpiece spindle (15) that is arranged in a skewed manner relative to the tool rotational axis (4) and rotationally driven synchronous thereto about a workpiece rotational axis (3), and wherein said device comprises a control (20), which is programmed in such a way that machining edges (8) of the machining teeth (7) machine the tooth flanks (9) of the teeth (5) of the workpiece (2) in the direction in which the tooth flanks extend, **characterized in that** the control unit (20) is programmed in such a way, the rotational axes (3, 4) are spaced apart from one another in such a way and the machining teeth (7) are designed in such a way that the machining teeth (7) act upon the tooth flanks (9) in a smoothing manner without metal removal.

8. The device according to claim 7, **characterized in that** the rounding radius (R) of the machining edges (8) is greater than the machining thickness or cutting depth (E).

9. The device according to claim 7 or 8, **characterized in that** the workpiece (2) consists of a tempering steel or nitriding steel.

10. The device according to claim 9, **characterized in that** the tensile strength of the material of the workpiece (2) amounts to no more than 1350 N/mm².

11. The device according to one of the claims 7 to 10, **characterized in that** the workpiece (2) has an internal toothing or an external toothing, the tooth flanks (9) of which are smoothed by the machining edges (8).

12. The device according to one of the claims 7 to 11, **characterized in that** the machining teeth (7) are formed by an internal toothing or an external toothing.

13. A tool for carrying out the method according to one of the claims 1 to 6, wherein said tool is rotationally driven about a tool rotational axis (4), comprises machining teeth (7) with a machining edge (8) having an edge rounding (R) and is designed in the form of a circular skiving cutter, **characterized in that** the rounding radius (R) of the machining edge (8) is greater than 50 micrometer.

## Revendications

1. Procédé d'usinage de finition de pièces dentées (2) avec un outil (1) constitué à la manière d'une roue à tailler en développante, entraîné en rotation par une broche porte-outil (17), qui comporte des dents d'usinage (7), qui viennent en prise dans les entredents de la pièce (2) portée par une broche porte-outil (15) disposée inclinée par rapport à l'axe de rotation d'outil (4) et entraînée à cet effet de façon synchronisée dans un mouvement de roulis de telle manière que les arêtes d'usinage (8) des dents d'usinage (7) usinent les flancs de dents (9) des dents (5) de la pièce (2) en direction de l'extension de flanc de dent, **caractérisé en ce que** les arêtes d'usinage (8) sollicitent par meulage les flancs de dents (9) sans enlèvement de copeaux.

2. Procédé selon la revendication 1, **caractérisé en ce que** le rayon d'arrondi (R) des arêtes d'usinage (8) est plus grand que l'épaisseur de copeau ou la profondeur de coupe (E).

3. Procédé selon l'une quelconque des revendications précédentes, **caractérisé en ce que** la pièce (2) est composée d'un acier spécial de traitement ou d'acier nitruré.

4. Procédé selon la revendication 3, **caractérisé en ce que** la résistance à la traction de la matière de la pièce (2) est au maximum de 1350 N/mm².

5. Procédé selon l'une quelconque des revendications précédentes, **caractérisé en ce que** la pièce (2) comporte une denture intérieure ou une denture extérieure, dont les flancs de dents (9) sont meulés par les arêtes d'usinage (8).

6. Procédé selon l'une quelconque des revendications précédentes, **caractérisé en ce que** les dents d'usinage (7) sont constituées d'une denture intérieure ou d'une denture extérieure.

7. Dispositif d'usinage de finition de pièces dentées (2) avec un outil (1) constitué à la manière d'une roue à tailler en développante entraînée en rotation autour d'un axe de rotation d'outil (4) par une broche porte-outil (17), qui comporte des dents d'usinage (7), qui viennent en prise dans les entredents (6) de la pièce (2) portée par une broche porte-pièce (15) disposée inclinée par rapport à l'axe de rotation d'outil (4) et entraînée en rotation autour d'un axe de rotation de pièce (3) à cet effet de façon synchronisée dans un mouvement de roulis, avec une commande (20), qui est programmée de telle façon que les arêtes d'usinage (8) des dents d'usinage (7) usinent les flancs de dents (9) des dents (5) de la pièce (2) en direction d'extension de flanc de dent, **caractérisé en ce que** le dispositif de commande (20) est programmé de telle manière, que les axes de rotation (3, 4) sont à distance l'un de l'autre et les dents d'usinage (7) sont configurées de telle sorte que les dents d'usinage (7) sollicitent par meulage les flancs de dents (9) sans enlèvement de copeaux.

8. Dispositif selon la revendication 7, **caractérisé en ce que** le rayon d'arrondi (R) des arêtes d'usinage (8) est plus grand que l'épaisseur de copeau ou la profondeur de coupe (E).

9. Dispositif selon la revendication 7 ou 8, **caractérisé en ce que** la pièce (2) est composée d'un acier spécial de traitement ou d'acier nitruré.

10. Dispositif selon la revendication 9, **caractérisé en ce que** la résistance à la traction de la matière de la pièce (2) est au maximum de 1350 N/mm².

11. Dispositif selon l'une quelconque des revendications 7 à 10, **caractérisé en ce que** la pièce (2) comporte une denture intérieure ou une denture extérieure, dont les flancs de dents (9) sont meulés par les arêtes d'usinage (8).

12. Dispositif selon l'une quelconque des revendications 7 à 11, **caractérisé en ce que** les dents d'usinage (7) sont constituées par une denture intérieure ou une denture extérieure.

13. Outil destiné à mettre en œuvre le procédé selon l'une quelconque des revendications 1 à 6, lequel peut être entraîné en rotation autour d'un axe de rotation d'outil (4), comporte des arêtes d'usinage (8) comportant des dents d'usinage (7) avec un arrondi d'arête (R) et est configuré à la manière d'une roue à tailler en développante, **caractérisé en ce que** le rayon d'arrondi (R) des arêtes d'usinage (8) est plus grand que 50 micromètres.
